# EUROPEAN PATENT APPLICATION

(11) **EP 2 749 753 A2**
(43) Date of publication of application: **02.07.2014**
(21) Application number: 13198827.1
(22) Date of filing: 20.12.2013
(51) Int. Cl.: F02C 7/228, F02C 9/26, F02C 9/28

(54) **Electricity generating gas turbine**

(30) Priority: 27.12.2012 JP 2012283856
(71) Applicant: Hitachi, Ltd., Tokyo 100-8280 (JP)
(72) Inventor: Takahashi, Kazuo, Tokyo, 100-8280 (JP); Kusumi, Naohiro, Tokyo, 100-8280 (JP); Ito, Tomomichi, Tokyo, 100-8280 (JP); Hino, Noriaki, Tokyo, 100-8280 (JP)
(74) Representative: MERH-IP Matias Erny Reichl Hoffmann

(57) **Abstract**

An electric-generating gas turbine includes a compressor (103) configured to compress air, a combustor (112) configured to generate combustion gas by mixing and combusting the air compressed by the compressor (103) and fuel, a turbine (114) configured to be driven by the combustion gas, and an electric generator (116) configured to generate electricity by the rotational force of the turbine (114), further including a fuel pipe (111) configured to supply fuel to the combustor (112), a fuel control valve (108) provided in the fuel pipe (111), a fuel discharge pipe (203) bifurcated from the fuel pipe (111) between the fuel control valve (108) and the combustor (112), and a fuel discharge valve (120) provided in the fuel discharge pipe (203).

## Description

### BACKGROUND OF THE INVENTION

### 1. Technical Field

The present invention relates to an electric-generating gas turbine.

### 2. Description of the Related Art

A gas turbine is an apparatus configured to obtain a motive power for driving a load such as an electric generator or a pump by compressing air taken from the outside with a compressor, feeding the obtained compressed air to a combustor as air to be combusted, and rotating the turbine by combustion gas generated by mixing and combusting fuel. The gas turbine is widely prevalent for electric generation owing to a wide operational load range in which output can be supplied and a good response for a load command.

In contrast, in recent years, in view of reduction of environmental load, introduction of electric generation systems using renewable energy represented by photovoltaic power generation and wind force power generation is positively pushed ahead. These electric generation systems are subjected to increase and decrease of the electricity generation amount due to the weather, and hence are characterized by difficulty of manipulation of the electricity generation amount against a rapid change of electric power demand. A point that stability of an electric power system is lowered when the ratio of the electric generation by the renewable energy in the electric power system is increased is well known, and hence developing technology for stabilizing the electric power system is pushed ahead. In particular, when the ratio of the electric generation by the renewable energy is high, electric generators which cannot support lowering of a system voltage at the time of occurrence of electric power system accident such as thunderbolt or disconnection result in parallel off, which may result in lowering of electric power quality due to the spread of an effect thereof to the entire electrical power system.

In order to maintain the quality of the electric power, Fault Ride Through (herein referred to as FRT) attracts attention. The FRT means an operation continuation performance with respect to a system voltage drop generated at the time of occurrence of the system accident, and in other words, a performance capable of continuing generation of electric power without resulting in parallel off from the electric power system. The electric-generating gas turbine of the related art has been contributed to the stabilization of the electric power system by being paralleled off once from the electric power system and incorporated again when the amount of the system voltage drop exceeds an allowable in case of occurrence of the system accident.

When the electric-generating gas turbine is paralleled off from the electric power system, a load working on the electric generator is quickly lost, and an excessive rotation which is a phenomenon in which the number of rotations of a shaft that has the electric generator increases transitionally occurs due to excessive energy. At this time, the electric-generating gas turbine reduces the opening degree of a fuel control valve, and reduces the fuel to be supplied to the combustor, so that the excessive energy is reduced. The number of rotations is prevented from exceeding an upper limit value of the mechanical design by suppressing the generation of the excessive energy, and time required until the number of rotations is restored to a rated value is reduced. There is a technology described below as a controlling method for preventing the excessive rotation when the load is rapidly lost during the operation of the gas turbine load.

In JP-A-2004-11459, a method of preventing an excessive rotation of a gas turbine by measuring the number of rotations of a power turbine and controlling the opening degree of a fuel control valve by a control apparatus is proposed. According to this method, the excessive rotation of a biaxial gas turbine having high sensitiveness for the excessive rotation may be prevented without impairing a high responsiveness of the gas turbine.

A case where the electric-generating gas turbine supports the FRT, that is, a case where the parallel-off is not performed and generation of electric energy is continued even when the system voltage is lowered in case of a system accident is considered. In this case, transmission of electric energy is disabled due to the system voltage drop, and the number of rotations of the shaft having the electric generator is transitionally increased due to the excessive energy in the same manner as a case where the parallel-off is performed. If the parallel off is allowed, it is sufficient to prevent the rotation from exceeding the upper limit value of the mechanical design as measure for the excessive rotation. However, the electric-generating gas turbine supporting the FRT requires reduction of the excessive rotation within a range in which the electric generator can prevent a loss of synchronism. When the loss of synchronism occurs in the electric generator, no electric power is generated from that moment onward. Therefore, transmission of electric energy cannot be restored even after the system voltage drop has resolved, so that the parallel-off needs to be performed once.

In general, as regards the number of rotations of the turbine and the shaft having the electric generator, an upper limit value which can prevent the loss of synchronism of the electric generator is smaller than the upper limit value of the mechanical design. Therefore, the electric-generating gas turbine supporting the FRT is subject to a severer restriction on reduction of excessive rotation than the electric-generating gas turbine of the related art. In order to reduce the excessive rotation, the method of reducing the opening degree of the fuel control valve, and reducing the fuel to be supplied to the combustor, thereby reducing the excessive energy is effective as described above.

However, only by reducing the opening degree of the fuel control valve, even though the reduction of the fuel supply amount from an upstream of the fuel control valve is possible, there is a problem that the reduction of amount of fuel flowing into the combustor from the excessive fuel remaining in a fuel pipe that connects the fuel control valve and the combustor is not possible. Although the method described in JP-2004-11459 proposes a method of controlling the fuel control valve for preventing the excessive rotation of the gas turbine, the fuel remaining in the pipe that connects the fuel control valve and the combustor is not specifically described.

If no measure is taken for this problem, even though the fuel control valve is completely closed, all of the fuel remaining in the fuel pipe flows into the combustor until the internal pressure of the fuel pipe is lowered to a level on the order of the internal pressure of a chamber of the combustor. Specifically, the electric-generating gas turbine may have long routing of the fuel pipe for the reasons such as arrangement of valves and the control apparatus in a power-generating plant and the structure of a turbine enclosure chamber, and hence the influence of the excessive fuel remaining in the fuel pipe on increase in the number of rotations cannot be ignored.

### SUMMARY

Accordingly, it is an object of the invention to provide a gas turbine capable of suppressing the amount of generation of excessive energy and reducing the number of rotations of a shaft.

In order to solve the above-described problem, an electric-generating gas turbine of the invention includes: a compressor configured to compress air, a combustor configured to generate combustion gas by mixing and combusting the air compressed by the compressor and fuel, a turbine configured to be driven by the combustion gas, and an electric generator configured to generate electricity by the rotational force of the turbine, further including a fuel pipe configured to supply the fuel to the combustor, a fuel control valve provided in the fuel pipe, a fuel discharge pipe bifurcated from the fuel pipe between the fuel control valve and the combustor, and a fuel discharge valve provided in the fuel discharge pipe.

According to the invention, a gas turbine capable of suppressing the amount of generation of excessive energy and reducing the number of rotations of a shaft is provided.

### BRIEF DESCRIPTION OF THE DRAWINGS

Fig. 1 is a schematic drawing of an electric-generating gas turbine;
Fig. 2 is a schematic drawing of the electric-generating gas turbine of Example 1;
Fig. 3 is a schematic drawing of the electric-generating gas turbine of Example 2;
Fig. 4 is a schematic diagram of a fuel discharge valve control apparatus block of Example 2;
Fig. 5 is a schematic drawing of the electric-generating gas turbine of Example 3; and
Fig. 6 is a schematic drawing of the electric-generating gas turbine of Example 4.

### DESCRIPTION OF THE PREFERRED EMBODIMENTS

### Example 1

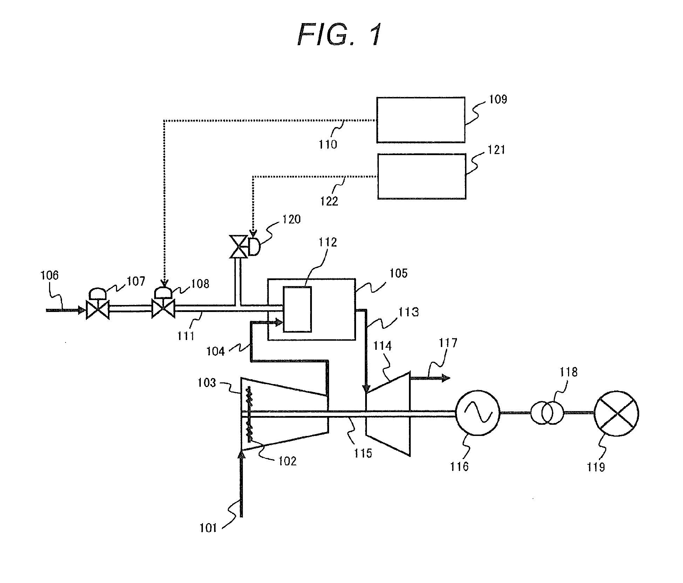

An electric-generating gas turbine of Example 1 of the invention will be described with reference to Fig. 1. Fig. 1 is a schematic drawing of an electric-generating gas turbine in which a fuel pipe that connects a fuel control valve and a combustor is bifurcated and connected to a fuel discharge valve.

In Fig. 1, air 101 is guided into the interior of a compressor 103 via an inlet guide vane 102. The air 101 compressed by the compressor 103 flows into a combustor chamber 105 as compressed air 104. In contrast, fuel 106 is fed from a fuel pressure regulation valve 107 to a fuel control valve 108. A fuel control valve control signal 110 is output from a fuel control valve control apparatus 109 to the fuel control valve 108, so that control of the opening degree of the fuel control valve 108 is performed by the fuel control valve control apparatus 109, whereby the flow rate of the fuel passing through a fuel pipe 111 and flowing through into the combustor chamber 105 is adjusted.

A combustor 112 is installed in the interior of the combustor chamber 105, in which the compressed air 104 and the fuel are mixed and burned by the combustor 112 to obtain high temperature combustion gas 113. The combustion gas 113 flows into a turbine 114, and drives an electric generator 116 via the turbine 114 and a rotating shaft 115 to generate electricity. The combustion gas 113 having driven the turbine 114 is discharged from the turbine 114 as exhaust gas 117. An electric power generated by the electric generator 116 is transmitted to an electric power system 119 via a breaker 118.

Here, the fuel pipe 111 connects the fuel control valve 108 and the combustor 112, but includes a bifurcation at a midsection thereof and a distal end of the bifurcation is connected to a fuel discharge valve 120. A fuel discharge valve control signal 122 is output from a fuel discharge valve control apparatus 121 to the fuel discharge valve 120, so that opening and closing control of the fuel discharge valve 120 by the fuel discharge valve control apparatus 121 is enabled.

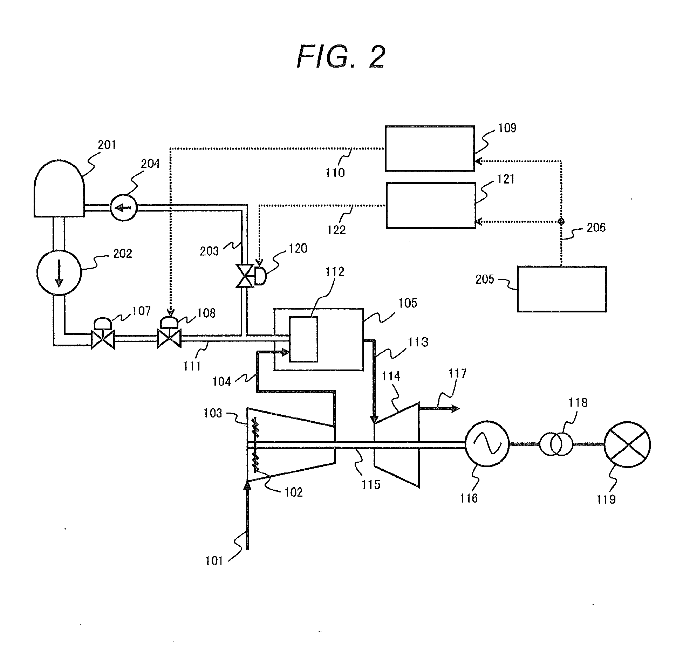

Fig. 2 is a schematic drawing of the electric-generating gas turbine in which the bifurcation is provided on the fuel pipe and the fuel discharge pipe is connected. The fuel fed from a fuel tank 201 to a fuel compressor 202 is compressed and fed to the fuel pressure regulation valve 107. Description about the outlines of other equipments described with reference to Fig. 1 will be omitted.

An operation of the fuel discharge valve 120, which is a principal equipment of Example 1 will be described. When the electric-generating gas turbine normally generates electricity, a rapid fuel reduction control apparatus 205 does not output a rapid fuel reduction command 206 to the fuel control valve control apparatus 109 and the fuel discharge valve control apparatus 121. If the rapid fuel reduction command 206 is not issued, the fuel control valve control apparatus 109 decides the opening degree of the fuel control valve 108 from operation information (not illustrated) such as electric power demand and outputs the decided opening degree as the fuel control valve control signal 110, so that the control of the opening degree of the fuel control valve 108 is achieved. In contrast, if the rapid fuel reduction command 206 is not issued, the fuel discharge valve control apparatus 121 outputs the fuel discharge valve control signal 122 indicating "closure" to the fuel discharge valve 120, to maintain the fuel discharge valve 120 in the closed state. Therefore, when the electric-generating gas turbine normally generates electricity, the fuel passing through the fuel control valve 108 does not flow into a fuel discharge pipe 203, and flows into the combustor 112 entirely.

However, when a load applied to the electric generator 116 is rapidly reduced due to the parallel-off of the breaker 118 or occurrence of the system voltage drop in the electric power system 119, the rapid fuel reduction control apparatus 205 outputs the rapid fuel reduction command 206 to the fuel control valve control apparatus 109 and the fuel discharge valve control apparatus 121. The fuel control valve control apparatus 109 outputs the fuel control valve control signal 110 to control the opening degree of the fuel control valve 108 to an opening degree corresponding to a state in which the electric generator 116 is in a no-load operation. In contrast, the fuel discharge valve control apparatus 121 outputs the fuel discharge valve control signal 122 indicating "fully open" to the fuel discharge valve 120 to open the fuel discharge valve 120. The fuel passing through the fuel discharge valve 120 is fed to a feedback pump 204 through the fuel discharge pipe 203, and is collected into the fuel tank 201.

In Example 1, the fuel passing through the fuel discharge valve 120 is fed to the fuel tank 201. However, the invention is not limited to this structure. For example, a structure in which the fuel discharge pipe 203 is connected in a fuel tank separate from the fuel tank 201, or a configuration in which a check valve is provided instead of the feedback pump 204 and is joined to a pipe that connects the fuel tank 201 and the fuel compressor 202 is also applicable. However, it is necessary to employ a structure which can maintain a state in which the pressure on downstream side of the fuel discharge valve 120 is lower than the pressure in the combustor chamber 105.

According to Example 1, when the load applied to the electric generator 116 is rapidly reduced and hence the flow rate of the fuel to be supplied to the combustor 112 is reduced, the fuel remaining in the fuel pipe 111 may be discharged to the outside of the combustor 112. Accordingly, the fuel flowing into the combustor 112 may be reduced in comparison with the case of the electric-generating gas turbine of the related art, the amount of generation of the excessive energy is suppressed, and the number of rotations of the rotating shaft 115 may further be reduced. Although the electric-generating gas turbine of the related art has a configuration in which all the fuel passing through the fuel control valve 108 flows into the combustor 112, according to Example 1, the excessive fuel flowing into the combustor 112 may be reduced by the fuel discharge valve 120. Therefore, an unnecessary combustion reaction generated in the combustor 112 is suppressed, and the amounts of discharge of NOx and CO₂ are reduced, and hence a reduction of environmental load is achieved. The fuel save is also expected by the collection of the fuel via the fuel discharge valve 120.

Here, the shorter the time required from a moment when the fuel discharge valve control signal 122 indicating "fully open" is received until the fuel discharge valve 120 reaches the fully opened state, the higher the effect of discharge of the excessive fuel. Therefore, the fuel discharge valve 120 is preferably driven electrically or by hydraulic pressure having a higher response than pneumatic driving, and an ON/OFF valve is preferable to an opening degree regulation valve.

### Example 2

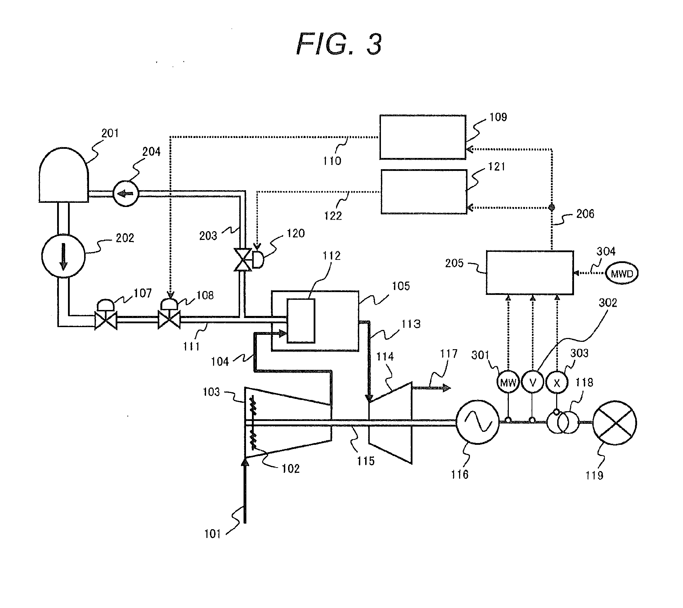

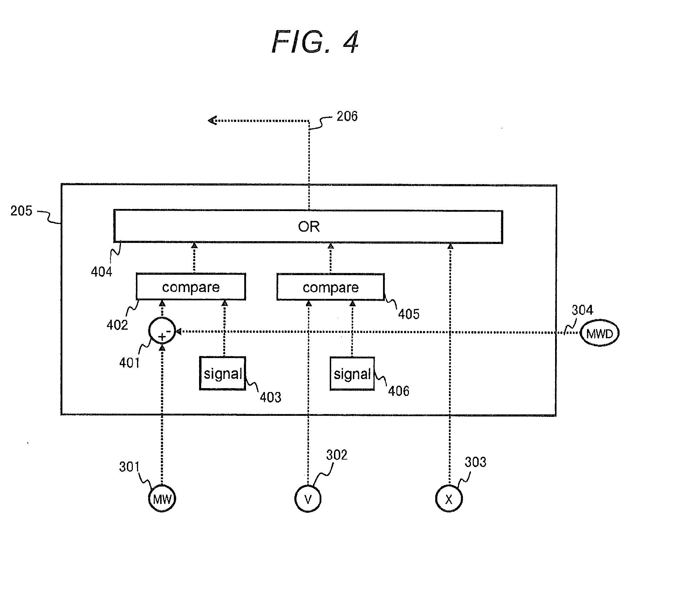

A configuration of Example 2 of the invention will be described on the basis of Fig. 3 and Fig. 4.

Fig. 3 is a schematic drawing of the electric-generating gas turbine in which the bifurcation is provided on the fuel pipe and the fuel discharge pipe is connected and a measuring unit is added. In Fig. 3, a power generating amount measuring unit 301 and a voltage measuring unit 302 are added to the configuration of the electric-generating gas turbine illustrated in Example 1 in Fig. 2, and an opening and closing detector 303 is added to the breaker 118. This configuration is characterized in that measurement signals and a target power command 304 from the power generating amount measuring unit 301, the voltage measuring unit 302, and the opening and closing detector 303 are input to the rapid fuel reduction control apparatus 205.

An operation of Example 2 will be described. Description of the same operation as the electric-generating gas turbine described in Example 1 of Fig. 2 will be omitted. The power generating amount measuring unit 301 measures the electricity generation amount of the electric generator 116 and transmits a measurement signal to the rapid fuel reduction control apparatus 205. The voltage measuring unit 302 measures a voltage of an electricity transmitting apparatus that connects the electric generator 116 and the electric power system 119, and transmits the measurement signal to the rapid fuel reduction control apparatus 205. The opening and closing detector 303 detects the parallel-off of the breaker 118, and transmits the measurement signal to the rapid fuel reduction control apparatus 205.

Subsequently, an operation of the rapid fuel reduction control apparatus 205 will be described. Fig. 4 is a schematic diagram of a fuel discharge valve control apparatus block. In the interior of the rapid fuel reduction control apparatus 205, a difference between the measurement signal of the power generating amount measuring unit 301 and the target power command 304 is calculated by a subtracter 401. The obtained difference is sent to a comparator 402. The comparator 402 compares the above-described difference and an allowable value of a deviation of the electricity generation amount preset in a signal generator 403, and if the difference exceeds the allowable value, transmits a true value of a logical signal to a logical sum calculator 404. In contrast, a comparator 405 compares the measurement signal of the voltage measuring unit 302 and an allowable value of the system voltage drop preset in a signal generator 406, and if the difference exceeds the allowable value, a true value of a logical signal is transmitted to the logical sum calculator 404. The opening and closing detector 303 detects whether the breaker 118 is in an opened state and, if it is in an opened state, a true value of a logical signal is transmitted to the logical sum calculator 404. When an output signal from any one of the comparator 402, the comparator 405, and the opening and closing detector 303 is a true value, the logical sum calculator 404 transmits the rapid fuel reduction command 206 to the fuel control valve control apparatus 109 and the fuel discharge valve control apparatus 121.

According to Example 2, when a load applied to the electric generator 116 is rapidly reduced by the parallel-off of the breaker 118 and the voltage drop of the electric power system 119, it is determined that the rapid fuel reduction control apparatus 205 is in a state in which the rapid fuel reduction control apparatus 205 reduces the fuel flow rate to be supplied to the combustor 112 and the rapid fuel reduction command 206 is transmitted to the fuel discharge valve control apparatus 121, so that the fuel remaining in the fuel pipe 111 may be discharged to the outside of the combustor 112. Accordingly, the same effect as Example 1 may be obtained.

For example, the voltage drop of the electric power system 119 may be controlled by the configuration in which the fuel discharge valve control apparatus 121 configured to control the opening degree of the fuel discharge pipe 203 and the rapid fuel reduction control apparatus 205 configured to issue a command to the fuel discharge valve control apparatus 121 are provided, the electric generator 116 is connected to the breaker 118, the voltage measuring unit 302 configured to measure the voltage between the electric generator 116 and the breaker 118 is provided, and the measurement signal of the voltage measuring unit 302 is utilized as an argument when generating a command of the rapid fuel reduction control apparatus 205.

In Example 2, the electricity generation amount of the electric generator 116, the voltage of the electricity transmitting apparatus that connects the electric generator 116 and the electric power system 119, the parallel-off of the breaker 118 and the target power command 304 are transmitted to the rapid fuel reduction control apparatus 205. However, a configuration in which only items that the electric-generating gas turbine specifically wants to regard are input is also applicable. For example, when only a point of improving the FRT capability of the electric-generating gas turbine is specifically wanted to be regarded, a rapid reduction of the load applied to the electric generator 116 due to the voltage drop of the electric power system 119 which is strongly related to the FRT capability may be monitored by inputting only the measurement signal of the voltage measuring unit 302 to the rapid fuel reduction control apparatus 205.

### Example 3

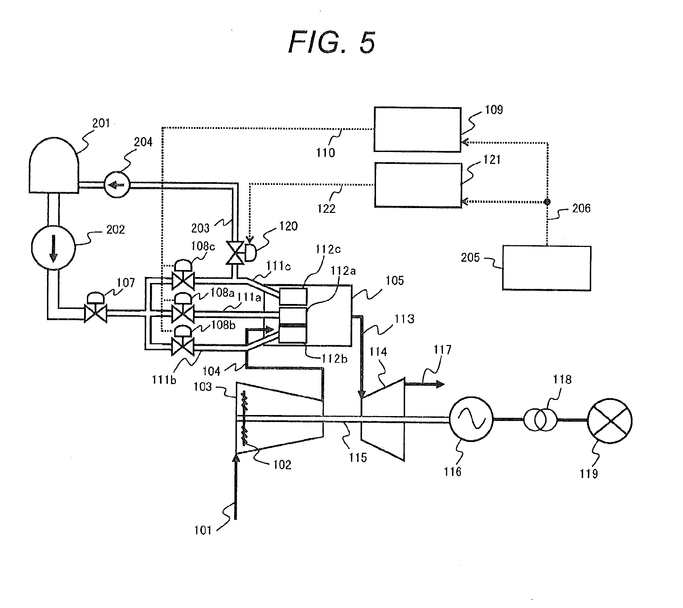

A configuration of Example 3 of the invention will be described on the basis of Fig. 5.

Fig. 5 is a schematic drawing of the electric-generating gas turbine including a bifurcation on the fuel pipe to connect the fuel discharge valve, a plurality of combustors provided in the combustor chamber, and configured to be capable of a combustion switching operation. In Fig. 5, pluralities of the fuel control valves 108, the fuel pipes 111, and the combustors 112 are provided in the configuration of the electric-generating gas turbine described in Example 1 of Fig. 2. A three unit configuration having fuel control valves 108a, 108b and 108c, fuel pipes 111a, 111b and 111c, and combustors 112a, 112b, and 112c is exemplified in Example 3. However, the number of the regulation valves, the fuel pipes, and the combustors are not limited and needs only to be plural. Example 3 is characterized in that only the fuel pipe 111c has a bifurcation, and is connected to the fuel discharge valve 120. However, Example 3 is characterized by a point that the bifurcations are provided only some of the plurality of fuel pipes instead of all of the fuel pipes and connected to the fuel discharge valve, and the characteristic is not limited to that only one of the fuel pipes is provided with the bifurcation and connected to the fuel discharge valve.

An operation of Example 3 will be described. Description of the same operation as the electric-generating gas turbine described in Example 1 of Fig. 2 will be omitted.

The fuel control valve control apparatus 109 decides the opening degrees of the fuel control valves 108a, 108b, and 108c from operation information (not illustrated) such as electric power demand and outputs the decided opening degrees as the fuel control valve control signal 110, so that the control of the opening degrees of the fuel control valves 108a, 108b, and 108c is achieved. The fuel fed from the fuel control valves 108a, 108b and 108c flows into the combustors 112a, 112b, and 112c via the fuel pipes 111a, 111b, and 111c, respectively.

Here, the combustor composed of the plurality of combustors as illustrated in Example 3 is generally referred to as a low NOx combustor and employs an operation method of igniting only the combustor on the basis of high diffusing combustion having high combustion stability at the time of the low-load operation, and igniting the combustor in sequence on the basis of premixed combustion having high efficiency and low NOx exhaust in comparison with the diffusing combustion although a stable combustion range is narrower when the fuel flow rate is increased in association with the load increase. In Example 3, the combustors 112a and 112b are assumed to be configured as the combustors on the basis of the diffusing combustion, and to be ignited in a no-load operating state, while the combustor 112c is assumed to be configured as the combustor on the basis of the premixed combustion and to be in an ignited state at the time of high-load operation, but to be extinguished in a state of a no-load operation, and the fuel control valve 108c is assumed to be in the closed state in the no-load operating state.

In Example 3, when the rapid fuel reduction command 206 is output, the fuel control valve control apparatus 109 outputs the fuel control valve control signal 110 to control the opening degrees of the fuel control valves 108a, 108b, and 108c to an opening degree corresponding to a state in which the electric generator 116 is in a no-load operation. Therefore, a command of closure is output to the fuel control valve 108c. In contrast, the fuel discharge valve control apparatus 121 outputs the fuel discharge valve control signal 122 indicating "fully open" to the fuel discharge valve 120, but a fuel pipe having the bifurcation to which the fuel discharge valve 120 is connected is only the fuel pipe 111c. From the excessive fuel remaining in the fuel pipe, the fuel whose flow rate flowing into the combustor is reduced is only the system of the combustor 112c.

According to Example 3, when the load applied to the electric generator 116 is rapidly reduced and hence the flow rate of the fuel to be supplied at least to the combustor 112c is cut off, the fuel remaining in the fuel pipe 111c may be discharged to the outside of the combustor 112c. Accordingly, the same effect as Example 1 may be obtained as regards the combustor 112c.

Furthermore, in Example 3, the first combustor 112c and the second combustors 112a and 112b are provided as the combustor 112, and the first fuel pipe 111c configured to supply fuel to the first combustor 112c, the first fuel control valve 108c provided in the first fuel pipe 111c, the fuel discharge pipe 203 bifurcated from the first fuel pipe 111c between the first fuel control valve 108c and the first combustor 112c, the fuel discharge valve 120 provided in the fuel discharge pipe 203, the second fuel pipes 111a and 111b configured to supply fuel to the second combustors 112a and 112b, and the second fuel control valves 108a and 108b provided in the second fuel pipes 111a and 111b are provided. Therefore, the fuel flowing into the combustors 112a and 112b which are required to keep flame for continuing the combustion is not affected by the fuel discharge valve 120, so that the same flow rate of the fuel as the electric-generating gas turbine of the related art may be supplied and hence the stability of the flame may be maintained. In Example 3, the combustors 112a and 112b are in the ignited state at the no-load operating state, and the number of installed fuel discharge valve 120 is one. However, the number of the combustors to be ignited among the combustors 112a, 112b, and 112c and the number of the installed fuel discharge valve 120 are not specifically limited. When not only the combustor 112c, but also the combustor 112b is extinguished in the no-load operating state, an effect of discharge of the excessive fuel may be enhanced by providing the bifurcation also on the fuel pipe 111b and connecting the fuel discharge valve 120b. According to the method of Example 3, there is also an advantage that the effect of reduction of the excessive energy to be obtained may be increased with a small number of installed fuel discharge valves 120.

### Example 4

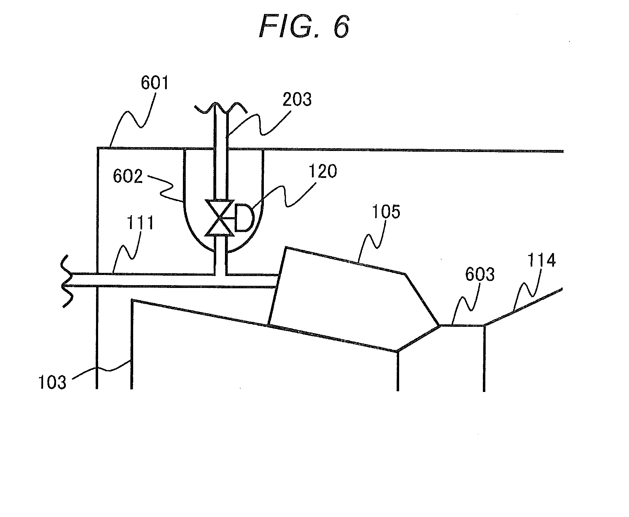

A configuration of Example 4 of the invention will be described on the basis of Fig. 6.

Fig. 6 is a schematic drawing of the electric-generating gas turbine in which the bifurcation is provided on the fuel pipe and the fuel discharge pipe is connected and the fuel discharge valve is installed on the outside of an enclosure chamber. In Fig. 6, in the configuration of the electric-generating gas turbine described in Example 1 of Fig. 2, a configuration of Example 4 is characterized in that a depressed shape 602 is provided on part of an enclosure wall 601 which constitutes the enclosure chamber in which a high-temperature portion of the electric-generating gas turbine is accommodated, and the fuel discharge valve 120 is installed in the depressed shape 602.

An operation of Example 4 is the same as the operation of the electric-generating gas turbine described in Example 1 of Fig. 2. In the interior of the enclosure chamber, the temperature is increased due to a heat transmission among high-temperature parts at the time of operation of the electric-generating gas turbine. It is considered that the temperature in the interior of the enclosure chamber reaches 100°C depending on the type of the electric-generating gas turbine. However, since the depressed shape 602 is provided out of the enclosure chamber and is exposed to the outside air, so that the temperature of the depressed shape 602 is maintained at a temperature lower than the interior of the enclosure chamber.

In this manner, according to Example 4 having a configuration in which the enclosure chamber in which at least part of the fuel pipe 111 and the combustor 112 are accommodated is provided and the fuel discharge pipe 203 is arranged on the outside of the enclosure chamber, since the fuel discharge valve 120 may be arranged on the outside of the enclosure chamber which has a high-temperature when the electric-generating gas turbine is operated in addition to the same effects as those in Example 1, a risk of catching fire is low even when an electromagnetic valve or a hydraulic valve is selected as the fuel discharge valve 120. In addition, in Example 4, since an outer wall of the enclosure chamber has a depressed shape portion and the fuel discharge pipe 203 is arranged in the depressed shape portion, the increase in capacity in association with the bifurcated connection of the fuel pipe 111 may be reduced even though the fuel discharge valve 120 is installed on the outside of the enclosure chamber, the effect of discharge of the excessive fuel may be maintained at a high level.

The respective examples described thus far provide the electric-generating gas turbine including the compressor 103 configured to compress air, the combustor 112 configured to generate combustion gas by mixing and combusting the air compressed by the compressor 103 and fuel, the turbine 114 configured to be driven by the combustion gas, and the electric generator 116 configured to generate electricity by the rotational force of the turbine 114, further including the fuel pipe 111 configured to supply the fuel to the combustor 112, the fuel control valve 108 provided in the fuel pipe 111, the fuel discharge pipe 203 bifurcated from the fuel pipe 111 between the fuel control valve 108 and the combustor 112, and the fuel discharge valve 120 provided in the fuel discharge pipe 203.

According to the electric-generating gas turbine as described above, when the flow rate of the fuel to be supplied to the combustor 112 is reduced due to the parallel-off from the electric power system and the drop of the electric power system voltage, the fuel remaining in the fuel pipe 111 may be discharged to the outside of the combustor 112. Accordingly, the fuel flowing into the combustor 112 may be reduced in comparison with the case of the electric-generating gas turbine of the related art, the amount of generation of the excessive energy is suppressed, and the number of rotations of the shaft may further be reduced. Since the increase of the number of rotations may be reduced in comparison with the related art, the FRT capability is also improved.

In the same manner, when the flow rate of the fuel to be supplied to the combustor is reduced due to the parallel-off from the electric power system and the drop of the electric power system voltage, although the electric-generating gas turbine of the related art has a configuration in which all the fuel passing through the fuel control valve flows into the combustor, according to the invention, the excessive fuel flowing into the combustor may be reduced by the fuel discharge valve. Therefore, an unnecessary combustion reaction generated in the combustor is suppressed, and the amounts of discharge of NOx and CO₂ are reduced, and hence a reduction of environmental load is achieved. The fuel save is also expected by the collection of the fuel via the fuel discharge valve.

Also, in a scene where the routing of the fuel pipe needs to be considered, the electric-generating gas turbine of the related art needs to reduce the influence of the excessive fuel remaining in the fuel pipe on the increase of the number of rotations by reducing the length of the route of the fuel pipe. According to the invention, since the excessive fuel may be discharged to the outside of the combustor by the fuel discharge valve, the allowable value of the route length of the fuel pipe is increased, and hence the design flexibility of the electric-generating gas turbine may be advantageously enhanced.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. An electric-generating gas turbine including a compressor (103) configured to compress air (101), a combustor (112) configured to mix and combust the air (104) compressed by the compressor (103) and fuel (106) to generate combustion gas (113), a turbine (114) driven by the combustion gas (113), and an electric generator (116) configured to generate electricity by a rotational force of the turbine (114), comprising:
a fuel pipe (111) configured to supply the fuel (106) to the combustor (112);
a fuel control valve (108) provided in the fuel pipe (111);
a fuel discharge pipe (203) bifurcated from the fuel pipe (111) between the fuel control valve (108) and the combustor (112); and
a fuel discharge valve (120) provided in the fuel discharge pipe (203).

2. The electric-generating gas turbine according to Claim 1, further comprising:
a fuel discharge valve control apparatus (121) configured to control the opening degree of the fuel discharge valve (120) and a rapid fuel reduction control apparatus (205) configured to issue a command (206) to the fuel discharge valve control apparatus (121), wherein
the electric generator (116) is connected to a breaker (118), and a voltage measuring unit (302) configured to measure the voltage between the electric generator (116) and the breaker (118) is provided, and
a measurement signal from the voltage measuring unit (302) is used as an argument of generation of the command (206) of the rapid fuel reduction control apparatus (205).

3. The electric-generating gas turbine according to Claim 1 or 2, further comprising:
a first combustor (112c) and a second combustor (112a; 112b) as the combustor;
a first fuel pipe (111c) configured to supply the fuel (106) to the first combustor (112c);
a first fuel control valve (108c) provided in the first fuel pipe (111c);
a fuel discharge pipe (203) bifurcated from the first fuel pipe (111c) between the first fuel regulating valve (109c) and the first combustor (112c);
a fuel discharge valve (120) provided in the fuel discharge pipe (203);
a second fuel pipe (111a; 111b) configured to supply the fuel (106) to the second combustor (112a; 112b); and
a second fuel control valve (108a; 108b) provided in the second fuel pipe (111a; 111b).

4. The electric-generating gas turbine according to any one of Claims 1 to 3, further comprising:
an enclosure chamber configured to accommodate at least part of the fuel pipe (111) and the combustor (112), wherein
the fuel discharge valve (120) is provided on the outside of the enclosure chamber.

5. The electric-generating gas turbine according to Claim 4, wherein
an outer wall (601) of the enclosure chamber includes a depressed shaped portion (602), and the fuel discharge valve (120) is arranged in the depressed shaped portion (602).
